# EUROPEAN PATENT APPLICATION

(11) **EP 4 312 350 A1**
(43) Date of publication of application: **31.01.2024**
(21) Application number: 21933315.0
(22) Date of filing: 28.12.2021
(51) Int. Cl.: H02K 3/04, H02K 15/085, H02K 1/16

(54) **STATOR AND STATOR MANUFACTURING METHOD**

(30) Priority: 24.03.2021 JP 2021050124
(71) Applicant: Nidec Corporation, Kyoto-shi, Kyoto 601-8205 (JP)
(72) Inventor: KANNO, Tomohisa, Kyoto-shi, Kyoto 601-8205 (JP); TANGE, Hiroshi, Kyoto-shi, Kyoto 601-8205 (JP)
(74) Representative: Viering, Jentschura & Partner mbB Patent- und Rechtsanwälte
(86) International application number: PCT/JP2021/048733
(87) International publication number: WO 2022/201725

(57) **Abstract**

A stator from a first aspect of the present invention includes: a stator core having a plurality of slots penetrating in an axial direction; and a plurality of coil wires arranged in the slots, in which the coil wires have a circular cross-sectional shape, and side surfaces in circumferential both ends of the slot are planes axially extending with a constant circumferential width from a radially inner end to a radially outer end. A manufacturing method of a stator from a second aspect of the present invention is a manufacturing method of a stator including a stator core having a plurality of slots penetrating in an axial direction, the manufacturing method including: a process of annularly winding a coil wire having a circular cross-sectional shape to form a coil; and a process of inserting the coil into the slot, in which side surfaces in circumferential both ends of the slot are planes axially extending with a constant circumferential width from a radially inner end to a radially outer end.

## Description

### TECHNICAL FIELD

The present invention relates to a stator and a manufacturing method of the stator.

### BACKGROUND ART

Conventionally, a stator including a stator core having teeth and a coil wire arranged in a slot between the teeth is known. As such stator, for example, JP 2001-298917 A (Patent Literature 1) discloses a structure in which a teeth portion is bent in a circumferential direction and a coil wire is wound around the teeth portion.

### CITATIONS LIST

### PATENT LITERATURE

Patent Literature 1: JP 2001-298917 A

### SUMMARY OF INVENTION

### TECHNICAL PROBLEMS

Patent Literature 1 discloses improvement of a space factor by restraining a dead space of a coil wire in a slot. The present inventor has set a goal in improvement of a space factor from a viewpoint different from that of Patent Literature 1.

An object of the present invention is to provide a stator and a manufacturing method of the stator that improve a space factor.

### SOLUTIONS TO PROBLEMS

A stator from a first aspect of the present invention includes: a stator core having a plurality of slots penetrating in an axial direction; and a plurality of coil wires arranged in the slots, in which the coil wires have a circular cross-sectional shape, and side surfaces in circumferential both ends of the slot are planes axially extending with a constant circumferential width from a radially inner end to a radially outer end.

A manufacturing method of a stator from a second aspect of the present invention is a manufacturing method of a stator including a stator core having a plurality of slots penetrating in an axial direction, the manufacturing method including: a process of annularly winding a coil wire having a circular cross-sectional shape to form a coil; and a process of inserting the coil into the slot, in which side surfaces in circumferential both ends of the slot are planes axially extending with a constant circumferential width from a radially inner end to a radially outer end.

### ADVANTAGEOUS EFFECTS OF INVENTION

The present invention can provide a stator and a manufacturing method of the stator that improve a space factor.

### BRIEF DESCRIPTION OF DRAWINGS

FIG. 1 is a schematic view of a cross section perpendicular to an axial direction of a stator of an embodiment.
FIG. 2 is an enlarged view of FIG. 1.
FIG. 3 is an enlarged view in which a rectangular wire is inserted into a slot of the embodiment.
FIG. 4 is a flowchart illustrating a manufacturing method of the stator of the embodiment.
FIG. 5 illustrates a stator of a variation 1 and is a schematic view corresponding to FIG. 2.
FIG. 6 illustrates a stator of a variation 2 and is a schematic view corresponding to FIG. 2.
FIG. 7 illustrates the stator of the variation 2 and is an enlarged view of FIG. 6.
FIG. 8 illustrates a stator of a variation 3 and is an enlarged view corresponding to FIG. 7.

### DESCRIPTION OF EMBODIMENT

Hereinafter, an embodiment of the present invention will be described with reference to the drawings. Note that in the following drawings, an identical or corresponding component is denoted by an identical reference sign, and the description will not be repeated.

In the following description, a direction in which the central axis of a stator 1 extends, that is, a penetrating direction of a slot 24 is referred to as "axial direction". One side along the axial direction is defined as a down (rear) side, and the other side is defined as an up (front) side. The up-down (front-rear) direction is used to specify the positional relationship, and does not limit the actual direction. That is, a downward direction does not necessarily mean the direction of gravity. The axial direction is not particularly limited, and includes a vertical direction, a horizontal direction, and a direction intersecting these directions.

A direction orthogonal to the central axis of the stator 1 is referred to as "radial direction". Moreover, a direction along an arc centered on the central axis of the stator 1 is referred to as "circumferential direction".

In the drawings used in the following description, a characteristic portion may be enlarged for the purpose of emphasizing the characteristic portion. Therefore, the dimensions and ratios of respective components are not necessarily the same as actual ones. For the same purpose, less characteristic portions may be omitted from the drawings.

### (Stator)

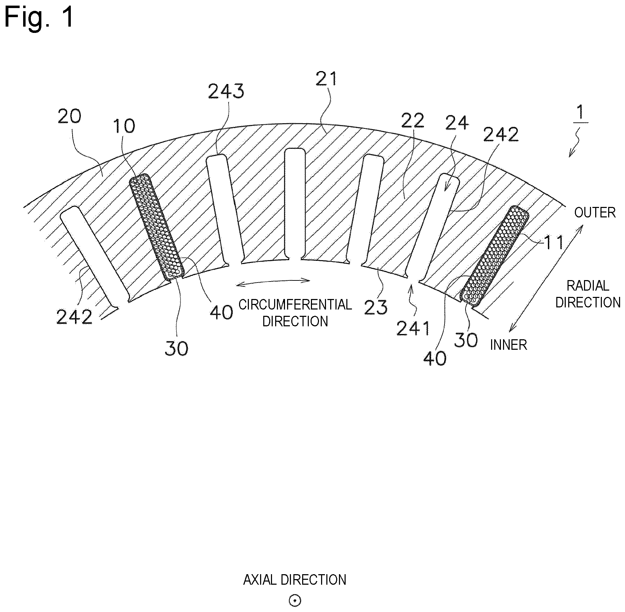

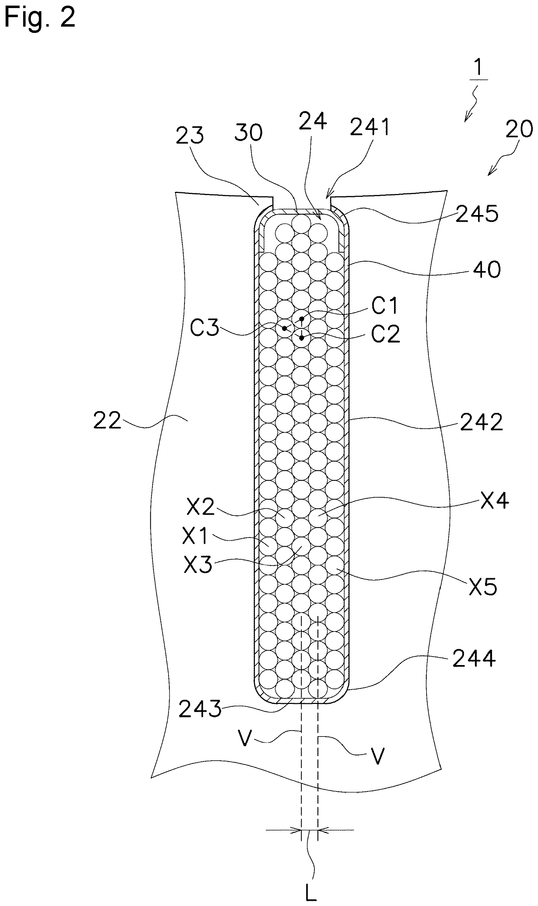

As illustrated in FIGS. 1 and 2, the stator 1 is a component of a motor, and interacts with a rotor (not illustrated) to generate rotational torque. The stator 1 of the present embodiment is a distributed winding in which a coil wire is wound across several slots 24. The stator 1 includes a coil 10, a stator core 20, a wedge 30, and insulating paper 40.

### <Coil>

The coil 10 is formed by winding a coil wire 11 in an annular shape. The coil wire 11 is a coil wire (hereinafter, also referred to as round wire) having a circular cross-sectional shape.

The coil 10 has two coil side portions and a coil crossover portion. The two coil side portions are accommodated in the slot 24. In FIGS. 1 and 2, the coil wire 11 arranged in the slot 24 is a coil side portion of the coil 10. The diameters of the coil wires 11 illustrated in FIGS. 1 and 2 are all the same.

Specifically, the slot 24 in which one coil side portion is housed is different from the slot 24 in which the other coil side portion is housed. The slot 24 in which one coil side portion is housed and the slot 24 in which the other coil side portion is housed may be arranged in the circumferential direction via another slot as illustrated in FIG. 1 or may be adjacent to each other (not illustrated).

The coil crossover portion connects the two coil side portions. The coil crossover portion is arranged on each of axial both sides of the stator core 20. Specifically, the coil crossover portion positioned on an axially upper side is an upper coil end coupling upper end portions of the two coil side portions. The coil crossover portion positioned on an axially lower side is a lower coil end coupling lower end portions of the coil side portions.

### <Stator core>

The stator core 20 is integrated. The stator core 20 is formed in a hollow columnar shape. The stator core 20 is formed by laminating thin silicon steel plates. The stator core 20 includes a core back 21, a plurality of teeth 22, a plurality of umbrellas 23, and a plurality of the slots 24.

The core back is annular. The plurality of teeth 22 extend in the radial direction from the core back 21. The plurality of teeth 22 are arranged in the circumferential direction.

The umbrellas 23 are connected to radially inner end portions of the teeth 22 and extend to circumferential both sides. The circumferential width of the umbrellas 23 is greater than the circumferential width of the radially inner end portions of the teeth 22.

The plurality of slots 24 are provided between the teeth 22 adjacent in the circumferential direction. The plurality of slots 24 penetrate in the axial direction. The slot 24 of the present embodiment has a substantially rectangular shape as viewed in the axial direction.

As illustrated in FIG. 2, the slot 24 includes a slot open 241, a side surface 242, a radially outer end surface 243, a first connection portion 244, and a second connection portion 245. The slot open 241 is positioned in a radially inner end portion. The side surfaces 242 are positioned in circumferential both ends. The radially outer end surface 243 is positioned in a radially outer end portion. The first connection portion 244 connects the radially outer end surface 243 and the side surface 242. The second connection portion 245 connects the slot open 241 and the side surface 242. In the present embodiment, the outer shape of the slot 24 is defined by the slot open 241, the side surface 242, the radially outer end surface 243, the first connection portion 244, and the second connection portion 245.

The slot open 241 is formed radially inside and opens in the radial direction. The slot open 241 is smaller than the circumferential width of a space accommodating the coil side portion in the slot 24.

The side surfaces 242 are positioned in circumferential both ends. Here, two side surfaces 242 are arranged. The side surface 242 is a plane extending in the axial direction with a constant circumferential width from the radially inner end to the radially outer end. The side surface 242 of the present embodiment includes a plane.

In FIG. 2, the two side surfaces 242 are positioned in a circumferentially outer ends of the slot 24. That is, only the two side surfaces 242 are positioned in the circumferential outer ends. The circumferential widths of the two side surfaces 242 are always constant.

The radially outer end surface 243 is a surface positioned in the radially outer end portion. The radially outer end surface 243 of the present embodiment is one plane positioned in the radially outer end and extending in the axial direction. The radially outer end surface 243 includes a plane. The radially outer end surface 243 and the side surface 242 are orthogonal to each other.

The first connection portion 244 connects circumferential both ends of the radially outer end surface 243 and the radially outer end of the side surface 242. Here, two first connection portions 244 are arranged.

The first connection portion 244 has an R shape whose radius of curvature is the sum of the radius of the coil wire 11 and the thickness of the insulating paper 40. Due to this, the coil wire 11 can be arranged in the first connection portion 244, and therefore the space factor can be further improved. The radius of curvature is preferably about 0.6 mm.

The second connection portion 245 connects circumferential both ends of the slot open 241 and the radially inner end of the side surface 242. Here, two second connection portions 245 are arranged.

The second connection portion 245 has an R shape whose radius of curvature is equal to or less than the sum of the radius of the coil wire 11 and the thickness of the insulating paper 40. Due to this, the coil wire can be arranged in the second connection portion 245, and therefore the space factor can be further improved. The strength of the umbrella 23 can be improved. The radius of curvature is preferably 0.6 mm or more and 0.7 mm or less.

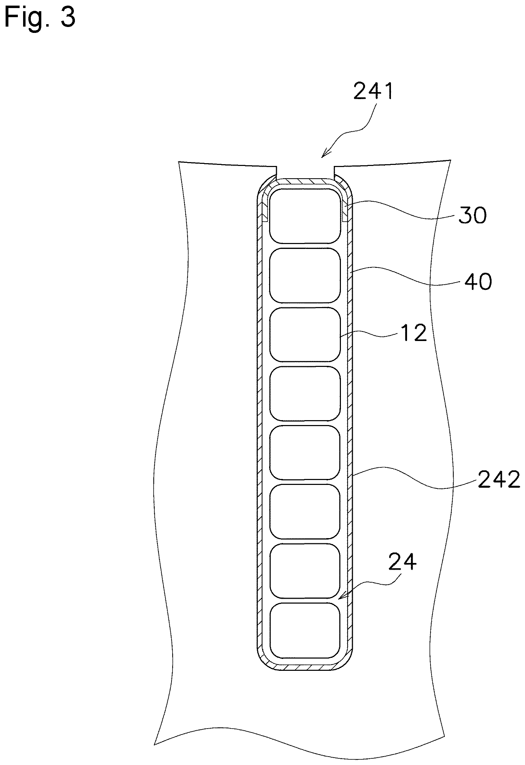

The slot 24 is shared with a coil wire (hereinafter, also referred to as rectangular wire) having a quadrangular cross-sectional shape. That is, a rectangular wire and a round wire can be arranged in the slot. Specifically, in the slot 24, a round wire can be arranged as illustrated in FIG. 2, and a rectangular wire 12 can be arranged as illustrated in FIG. 3.

### <Wedge>

The wedge 30 is arranged in the slot 24. In the present embodiment, the wedge 30 is arranged between the coil 10 arranged in the slot 24 and the slot open 241. The wedge 30 closes the slot open 241. The wedge 30 insulates the stator core 20 from the coil 10. The axial length of the wedge 30 is greater than the axial length of the slot 24.

The wedge 30 of the present embodiment has a U-shape as viewed in the axial direction. Specifically, a circumferential portion extending in the circumferential direction and two radial portions extending radially outward from both end portions of the circumferential portion are included. The circumferential portion and the radial portion may be formed of one member, or different members from each other may be connected.

### <Insulating paper>

The insulating paper 40 is arranged in the slot 24. The insulating paper 40 covers the coil 10 inserted into the slot 24. The insulating paper 40 is arranged along the teeth 22 partitioning a space excluding the radially inside in the slot 24. The insulating paper 40 of the present embodiment has a U-shape. Specifically, as illustrated in FIG. 1, a circumferential portion extending in the circumferential direction and two radial portions extending radially inward from both end portions of the circumferential portion are included. In FIG. 1, an opening of the insulating paper 40 and an opening of the wedge 30 are in directions opposite to each other. The thickness of the insulating paper 40 is not limited, and is, for example, 0.2 mm.

Note that the insulating paper 40 may have a cuff portion (not illustrated) protruding from an end surface on an axial one side of the stator core 20 and folded, and the insulating paper 40 may have a cuff portion (not illustrated) protruding from an end surface on an axial other side of the stator core 20 and folded.

### <Arrangement of coil wire>

As illustrated in FIG. 2, the coil wire 11 of the coil 10 arranged in the slot 24 forms a plurality of layers X1 to X5 arranged in the radial direction. The number of rows forming the layers is not limited, but it is preferably four rows or more and six rows or less, and more preferably five rows. In FIG. 2, the layers are X1 to X5 from the circumferential left side to the right side.

In the layers circumferentially adjacent to each other, an alignment portion in which a circumferential distance L between imaginary lines V connecting centers of the coil wires 11 is less than the diameter of the coil wires 11 is configured. The alignment portion is a portion where the coil wires 11 are stacked in the slot 24. In other words, the alignment portion is arranged such that centers C1, C2, and C3 of three coil wires 11 make an equilateral triangle as viewed in the axial direction by bringing the three coil wires 11 into contact with one another. Due to this, the coil wires can be stacked in the slot 24 having a quadrangular shape, and therefore the space factor can be further improved.

In the present embodiment, the alignment portion is positioned radially outside. The radially outside refers to outside relative to the radial center of the slot 24. On the radially outside the slot 24, the coil wires are easily stacked, and therefore a stator with an improved space factor can be easily achieved.

In FIG. 2, the alignment portion is positioned on the radially outer end surface 243 of the slot 24. Due to this, the coil wires can be stacked on the radially outer end surface 243 of the slot 24, and therefore the space factor can be further improved. Here, the alignment portion is in contact with the insulating paper 40 arranged radially inside the radially outer end surface 243 of the slot 24.

In the present embodiment, the alignment portion is positioned radially inside. The radially inside refers to inside relative to the radial center.

In FIG. 2, the alignment portion is in contact with the wedge 30. Due to this, the coil wires 11 can be stacked in the vicinity of the slot open 241, and therefore the space factor can be further improved.

The coil wire 11 is in contact with the insulating paper 40 arranged radially inside the first connection portion 244. Here, the coil wire 11 in contact with the insulating paper 40 arranged radially inside the first connection portion 244 constitutes the alignment portion.

The coil wire 11 is in contact with the insulating paper 40 arranged radially inside the second connection portion 245 (not illustrated). The coil wire 11 in contact with the insulating paper 40 arranged radially inside the second connection portion 245 constitutes the alignment portion.

In the present embodiment, the layer X3 opposing the slot open 241 is in contact with the wedge 30, and the layers X2 and X4 circumferentially adjacent to the layer X3 are in contact with the insulating paper 40 arranged on the radially outer end surface 243 of the slot 24. Note that here, the layer X3 opposing the slot open 241 is a layer positioned in the circumferential center. The layer X3 opposing the slot open 241 is not in contact with the insulating paper 40 arranged on the radially outer end surface 243 of the slot 24. The layers X2 and X4 circumferentially adjacent to the layer X3 opposing the slot open 241 are not in contact with the wedge 30 in FIG. 2, but may be in contact with the wedge 30.

The layers X1 and X5 positioned in circumferential both ends are in contact with the insulating paper 40 arranged radially inside the side surface 242. The coil wire 11 positioned on the radially outermost side of the layers X1 and X5 positioned in circumferential both ends is in contact with the insulating paper 40 arranged radially inside the first connection portion 244.

Note that in FIG. 2, the entire coil wire 11 constitutes the alignment portion, but a part of the coil wire 11 may constitute the alignment portion, and the remaining portion needs not constitute the alignment portion.

The radial width of the layer X3 radially opposing the slot open 241 is equal to or greater than the radial width of the layers X1 and X5 positioned in the circumferential end of the slot 24. Note that in FIG. 2, the radial width of the layer X3 radially opposing the slot open 241 is greater than the radial width of the layers X1 and X5 positioned in the circumferential end of the slot 24. Since a large number of the coil wires 11 constituting the layer X3 radially opposing the slot open 241 can be arranged in the slot 24, the space factor can be improved.

The radial width of the layer X3 radially opposing the slot open 241 is equal to or greater than the radial width of the layers X2 and X4 circumferentially adjacent to the layer X3. Note that in FIG. 2, the radial width of the layer X3 radially opposing the slot open 241 is the same as the radial width of the layers X2 and X4.

### (Manufacturing method of stator)

A manufacturing method of the stator 1 including the stator core 20 having the plurality of slots 24 penetrating in the axial direction of the present embodiment will be described with reference to FIGS. 1, 2, and 4. Specifically, it is the manufacturing method of the stator 1 including the stator core 20 of the integrated type including the core back 21 in an annular shape, the plurality of teeth 22 extending in the radial direction from the core back 21 and arranged in the circumferential direction, the umbrella 23 connected to the radially inner end portions of the teeth 22 and extending to the circumferential both sides, and the slot 24 provided between the teeth 22 circumferentially adjacent to each other and penetrating in the axial direction.

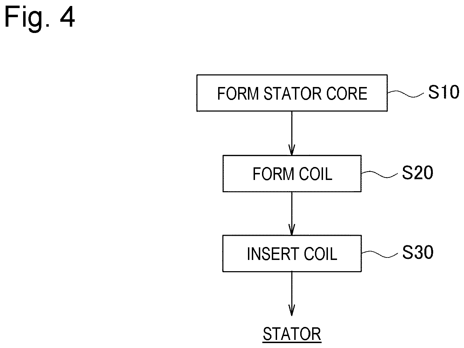

First, as illustrated in FIG. 4, the stator core 20 is formed (step S10). In this process (S10), as illustrated in FIGS. 1 and 2, the side surfaces 242 in circumferential both ends of the slot 24 are formed to be planes axially extending with a constant circumferential width from the radially inner end to the radially outer end.

Note that in the present embodiment, before the coil 10 described later is inserted into the slot 24, the insulating paper 40 is arranged in the slot 24.

As illustrated in FIG. 4, the coil 10 is formed by annularly winding the coil wire 11 having a circular cross-sectional shape (step S20). In this process (S20), the coil wire 11 is annularly wound to form the coil 10 having the two coil side portions accommodated in the slot 24 and the coil crossover portion connecting the two coil side portions and arranged on axial both sides of the stator core 20.

Next, the coil 10 is inserted into the slot 24 (step S30). This process (S30) is performed as follows, for example.

Specifically, the annular coil 10 formed in the process (S20) is held by a blade arranged radially inside the stator core 20. Next, the coil 10 is moved in the axial direction by a coil moving mechanism arranged radially inside the blade. Specifically, the coil moving mechanism is moved from an axial one side to the other side. Due to this, the two coil side portions of the coil 10 are arranged in the slot 24, the coil crossover portion on an axial one side straddles between the slots 24 on one side of the stator core 20, and the coil crossover portion on the other side straddles between the slots 24 on the other side of the stator core 20.

Note that in the process (S20) of the present embodiment, when the coil 10 is inserted into the slot 24, the wedge 30 is inserted together with the coil 10.

By performing the above processes (S10 to S30), it is possible to manufacture the stator 1 illustrated in FIGS. 1 and 2.

As described above, according to the stator 1 and the manufacturing method of the stator 1 of the present embodiment, the space factor can be improved by arranging the round wire in the slot 24 on the side surface having the constant circumferential width.

Specifically, as a result of intensive studies by the present inventor to improve the space factor of the round wire, the space factor can be improved from the conventional space factor of 54% to 58% by stacking the round wires in the quadrangular slot 24 in the cross-sectional view. This space factor is a value obtained when the layers X1 to X5 are five rows and 117 round wires having a diameter of 0.77 mm are stacked and inserted into the slot 24. Note that the space factor is a value obtained by (total cross-sectional area of the coil wire 11 excluding the coating)/(cross-sectional area of the slot 24 excluding the wedge 30 and the insulating paper 40) in the cross-sectional view illustrated in FIG. 2.

As described above, the space factor can be improved by the shape of the slot 24 and the arrangement of the coil wires 11 inserted into the slot 24 of the present embodiment.

### (Variation 1)

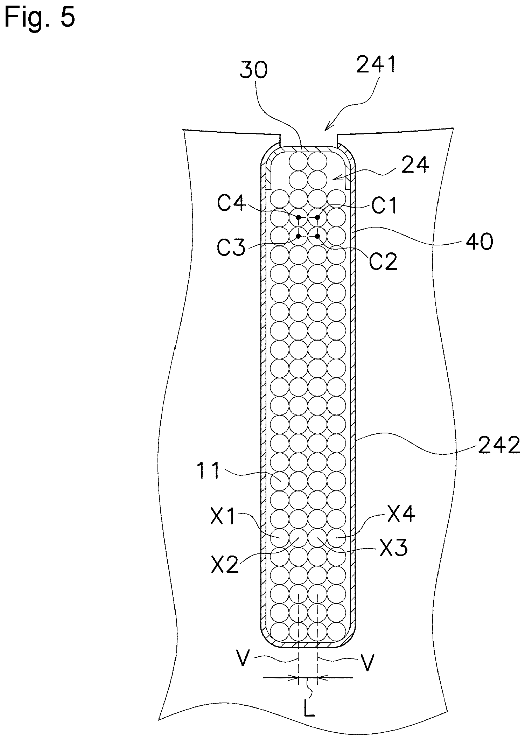

In the above-described embodiment, the stator in which all the coil wires 11 in the slot 24 are stacked has been described as an example. However, in the stator of the present invention, some of the coil wires 11 in the slot 24 may be stacked, and as illustrated in FIG. 5, not all the coil wires 11 in the slot 24 may be stacked. In the present variation, as illustrated in FIG. 5, the coil wires 11 in the slot 24 are arranged in the radial direction and the circumferential direction.

Specifically, as illustrated in FIG. 5, the coil wires 11 arranged in the slot 24 form the plurality of layers X1 to X4 arranged in the radial direction.

The four coil wires 11 are brought into contact with one another, and the centers C1, C2, C3, and C4 of the four coil wires 11 are arranged in a square shape as viewed in the axial direction. In the layers circumferentially adjacent to each other, the circumferential distance L between imaginary lines V connecting the centers of the coil wires 11 is the same as the diameter of the coil wire 11.

### (Variation 2)

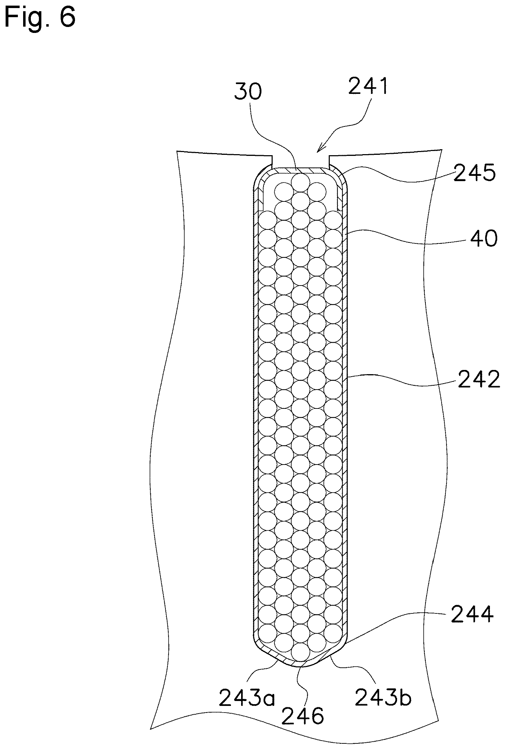

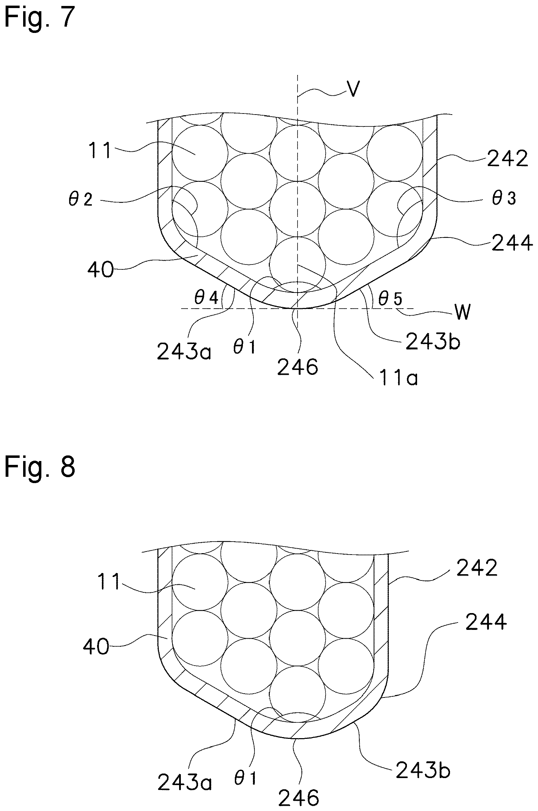

In the above-described embodiment, the structure in which the radially outer end surface 243 is a plane has been described as an example, but the radially outer end surface of the present invention is not limited. As illustrated in FIGS. 6 and 7, the present variation is mainly different from the embodiment in that the radially outer end surface 243 has a first surface 243a and a second surface 243b.

Specifically, the slot 24 includes the slot open 241, the side surface 242, the first surface 243a, the second surface 243b, the first connection portion 244, the second connection portion 245, and a third connection portion 246. The slot open 241, the side surface 242, and the second connection portion 245 are similar to those in the above-described embodiment. In the present variation, the outer shape of the slot 24 is defined by the slot open 241, the side surface 242, the first surface 243a, the second surface 243b, the first connection portion 244, the second connection portion 245, and the third connection portion 246.

The slot 24 has a protruding shape protruding radially outward by the first surface 243a and the second surface 243b extending in the axial direction in the radially outer end portion. As illustrated in FIG. 7, at least one coil wire 11a opposes the first surface 243a and the second surface 243b. As described above, the space factor can be further improved by arranging the at least one coil wire 11a so as to oppose the first surface 243a and the second surface 243b forming the protruding shape protruding radially outward in the radially outer end portion of the slot 24.

In the present embodiment, the at least one coil wire 11a is in contact with the insulating paper 40 arranged radially inside the protruding shape.

The coil wires 11 are arranged along the protruding shape. Here, three coil wires 11 are arranged along the first surface 243a, and three coil wires 11 are arranged along the second surface 243b.

In the present variation, the alignment portion where the coil wires 11 are stacked opposes the first surface 243a and the second surface 243b. That is, the coil wire 11a opposing the first surface 243a and the second surface 243b constitutes the alignment portion. Here, the layer corresponding to the third connection portion 246 constitutes the alignment portion.

The first surface 243a and the second surface 243b may be curved surfaces, but are planes in the present variation. Note that when the first surface 243a and the second surface 243b are curved surfaces, they may be curved surfaces bent toward the inside of the slot 24 or may be curved surfaces bent toward the outside of the slot 24.

An angle θ1 between the first surface 243a and the second surface 243b is preferably 110 degrees or more and 150 degrees or less, and most preferably 120 degrees. The angle θ1 is an angle at which the extending direction of the first surface 243a and the extending direction of the second surface 243b intersect each other.

An angle θ2 between the first surface 243a and the side surface 242 and an angle θ3 between the second surface 243b and the side surface 242 are preferably 110 degrees or more and 150 degrees or less, and most preferably 120 degrees. The angle θ2 is an angle at which the extending direction of the first surface 243a and the extending direction of the side surface 242 intersect each other. The angle θ3 is an angle at which the extending direction of the second surface 243b and the extending direction of the side surface 242 intersect each other.

The first connection portion 244 connects the first surface 243a and the second surface 243b and the side surface 242. The first connection portion 244 has an R shape whose radius of curvature is the sum of the radius of the coil wire 11 and the thickness of the insulating paper 40.

The third connection portion 246 connects the first surface 243a and the second surface 243b. That is, the third connection portion 246 is a coupling portion coupling the first surface 243a and the second surface 243b. The third connection portion 246 has an R shape. In FIG. 7, the radial position of the third connection portion 246 and the radial position of the coil wire 11a are the same.

In the present variation, an angle θ4 between a horizontal line W orthogonal to the imaginary line V and the first surface 243a is preferably 15 degrees or more and 35 degrees or less, and most preferably 30 degrees. An angle θ5 between the horizontal line W orthogonal to the imaginary line V and the second surface 243b is preferably 15 degrees or more and 35 degrees or less, and most preferably 30 degrees. The angle θ4 is an angle at which the extending direction of the first surface 243a and the extending direction of the horizontal line W intersect each other. The angle θ5 is an angle at which the extending direction of the second surface 243b and the extending direction of the horizontal line W intersect each other.

According to the present variation, the alignment portion can be configured to include the coil wire 11a opposing the first surface 243a and the second surface 243b forming the protruding shape protruding radially outward in the radially outer end portion of the slot 24. Due to this, by using the coil wire 11a as a starting point of the stack, it is possible to easily form the alignment portion. As described above, in the present variation, the arrangement of the coil wire 11 can be restricted from radially outside by giving the radially outer end portion of the slot 24 a protruding shape. Therefore, the space factor can be further improved.

### (Variation 3)

In the variation 2 described above, the radially outer end of the protruding shape is positioned at the circumferential center, but the present invention is not limited to this. In the present variation, as illustrated in FIG. 8, the radially outer end of the protruding shape is shifted to one side (right side in FIG. 8) in the circumferential direction from the circumferential center.

In the present variation, the number of rows of layers arranged in the radial direction is four. Three coil wires 11 are arranged along the first surface 243a, and two coil wires 11 are arranged along the second surface 243b.

### (Variation 4)

In the above-described embodiment, as illustrated in FIG. 1, the two slots 24 into which the coil is inserted are one slot 24 and another slot 24 with four slots 24 therebetween, but the present invention is not limited to this.

### (Variation 5)

In the above-described embodiment, the method for inserting one coil 10 into two slots 24 has been described as an example. A plurality of coils 10 may be simultaneously inserted into four or more slots 24.

It should be understood that the embodiment and variations disclosed herein are illustrative in all respects and not restrictive. The scope of the present invention is defined not by the above-described embodiment and variations but by the claims, and is intended to include all modifications within the meaning and scope equivalent to the claims.

### REFERENCE SIGNS LIST

- 1: stator
- 10: coil
- 11, 11a: coil wire
- 12: rectangular wire
- 20: stator core
- 24: slot
- 30: wedge
- 40: insulating paper
- 241: slot open
- 242: side surface
- 243: radially outer end surface
- 243a: first surface
- 243b: second surface
- 244: first connection portion
- 245: second connection portion
- 246: third connection portion (coupling part)
- C1, C2, C3, C4: center
- L: circumferential distance
- V: imaginary line
- X1, X2, X3, X4, X5: layer
- θ1, θ2, θ3: angle

## Claims

1. A stator comprising:
a stator core having a plurality of slots penetrating in an axial direction; and
a plurality of coil wires arranged in the slots, wherein
the coil wires have a circular cross-sectional shape, and
side surfaces in circumferential both ends of the slot are planes axially extending with a constant circumferential width from a radially inner end to a radially outer end.

2. The stator according to claim 1, wherein
the coil wires form a plurality of layers arranged in a radial direction, and
in the layers circumferentially adjacent to each other, an alignment portion in which a circumferential distance between imaginary lines connecting centers of the coil wires is less than a diameter of the coil wires is configured.

3. The stator according to claim 2, wherein the alignment portion is positioned radially outside.

4. The stator according to claim 3, wherein the alignment portion is positioned on a radially outer end surface of the slot.

5. The stator according to any one of claims 2 to 4, wherein
a slot open opened in a radial direction is formed radially inside the slot, and
a radial width of the layer radially opposing the slot open is equal to or greater than a radial width of the layer positioned in a circumferential end of the slot.

6. The stator according to any one of claims 2 to 5, wherein
a slot open opened in a radial direction is formed radially inside the slot,
a wedge arranged in the slot and arranged between the slot open and the coil wire is further included, and
the alignment portion is in contact with the wedge.

7. The stator according to any one of claims 1 to 6, wherein the slot has a protruding shape protruding radially outward by a first surface and a second surface extending in an axial direction in a radially outer end portion.

8. The stator according to claim 7, wherein an angle between the first surface and the second surface is 110 degrees or more and 150 degrees or less.

9. The stator according to any one of claims 1 to 8 further comprising insulating paper arranged in the slot, wherein
the slot further includes a first connection portion connecting a radially outer end surface and the side surface, and
the first connection portion has an R shape whose radius of curvature is a sum of a radius of the coil wire and a thickness of the insulating paper.

10. The stator according to any one of claims 1 to 9 further comprising insulating paper arranged in the slot, wherein
a slot open opened in a radial direction is formed radially inside the slot,
the slot further includes a second connection portion connecting the slot open and the side surface, and
the second connection portion has an R shape whose radius of curvature is equal to or less than a sum of a radius of the coil wire and a thickness of the insulating paper.

11. The stator according to any one of claims 1 to 8, wherein
the stator core is an integrated type, and
the coil wire is a distributed winding.

12. A manufacturing method of a stator including a stator core having a plurality of slots penetrating in an axial direction, the manufacturing method comprising:
annularly winding a coil wire having a circular cross-sectional shape to form a coil; and
inserting the coil into the slot, wherein
side surfaces in circumferential both ends of the slot are planes axially extending with a constant circumferential width from a radially inner end to a radially outer end.
